# EUROPÄISCHE PATENTANMELDUNG

(11) **EP 1 089 004 A1**
(43) Veröffentlichungstag der Anmeldung: **04.04.2001**
(21) Anmeldenummer: 00120621.8
(22) Anmeldetag: 21.09.2000
(51) Int. Cl.: F16D 1/09

(54) **Wellen-Naben-Verbindung**

(30) Priorität: 02.10.1999 DE 19947465
(71) Anmelder: KSB Aktiengesellschaft, 67227 Frankenthal (DE)
(72) Erfinder: Geinitz, Jürgen, Dr., 06114 Halle (DE)

(57) **Zusammenfassung**

Die Erfindung bezieht sich auf eine Wellen-Naben-Verbindung, bei der die Nabe mit einer axial zur Welle gerichteten Bewegung auf die Welle aufzuschieben und dort mittels eines in eine erste Richtung gedrehten Schraubelementes zu befestigen ist, wobei mit Hilfe des entgegen der ersten Richtung gedrehten Schraubelementes die Nabe von der Welle abzuziehen ist.

Eine aus einfachen Teilen bestehende und mit einfachem Werkzeug zu betätigende, in die Wellen-Naben-Verbindung integrierte Abziehvorrichtung wird erfindungsgemäß verwirklicht durch eine in eine Gewindebohrung der Welle (1) einzudrehende, mit einem Kopf (4) versehene Schraube (3), die einen Innenmehrkant (7) zur Aufnahme eines der Schraubendrehung dienenden Schüssels besitzt, wobei der Kopf (4) der Schraube (3) bei Herstellung der Wellen-Naben-Verbindung einerseits an einer von der Welle (1) abgewandten Stirnfläche (6) der Nabe (2) zur Anlage kommt, während andererseits der Kopf (4) in Lösungsrichtung durch ein Abdrückteil (9) beaufschlagt wird, das nach Anbringung der Schraube (3) an der Nabe (2) zu befestigen ist, wobei das Abdrückteil (9) so geartet ist, daß es den Zugang zum Innenmehrkant (7) der Schraube (3) frei läßt und eine Drehung der Schraube (3) in beiden Richtungen zuläßt

## Beschreibung

Die Erfindung betrifft eine Wellen-Naben-Verbindung, bei der die Nabe mit einer axial zur Welle gerichteten Bewegung auf die Welle aufzuschieben und dort mittels eines in eine erste Richtung gedrehten Schraubelementes zu befestigen ist, wobei mit Hilfe des entgegen der ersten Richtung gedrehten Schraubelementes die Nabe von der Welle abzuziehen ist.

Eine derartige Verbindung ist bekannt durch die DE 89 11 061 U1. Das dort verwendete Schraubelement, daß aus einer Schraube oder einem mit Gewinden versehenen Ring bestehen kann, verbindet ein mit einem Innenkonus versehenes Maschinenelement mit einer Welle, die einen Außenkonus besitzt. Das Schraubelement weist zwei Gewinde mit unterschiedlichen Steigungen auf, wobei das mit einem Innenkonus versehene Maschinenelement ein zum ersten Gewinde des Schraubelementes passendes Gegengewinde und die Welle mit dem Außenkonus ein zum zweiten Gewinde des Schraubelementes passendes Gegengewinde besitzt. Dabei greifen jeweils ein Gewinde und ein Gegengewinde ineinander. Aufgrund der unterschiedlichen, unter Umständen sogar gegenläufigen Steigungen der beiden Gewinde ergibt sich jeweils in der einen Drehrichtung des Schraubelementes ein Verspannen von Innen- und Außenkonus der miteinander zu verbindenden Teile, während in der entgegengesetzten Drehrichtung Innen- und Außenkonus voneinander gelöst werden.

Der Vorteil einer solchen Spannvorrichtung liegt auf der Hand: Die Verbindung kann gelöst werden, ohne daß Spezialwerkzeuge, wie Abziehvorrichtungen oder Abdrückschrauben, benötigt werden. Eine Demontage und ein Austausch von Verschleißteilen sind somit auch dort möglich, wo nur einfachste Werkzeuge zur Verfügung stehen. Dies erspart Zeit und Aufwand, da diese Spezialwerkzeuge nicht mehr beschafft und vorrätig gehalten werden müssen. Andererseits werden auch Versuche mit ungeeigneten Werkzeugen vermieden, die zu Verletzungen des Personals und zur Beschädigungen an Maschinen führen können.

Von steigender Bedeutung ist der Wunsch bzw. die Forderung nach einer recyclinggerechten Gestaltung von Aggregaten. Bei der zu erwartenden Entsorgung in Recyclingzentren ist vor allem darauf zu achten, daß eine Vielzahl von Aggregaten unterschiedlichster Art ohne großen Aufwand nur mit Hilfe einfacher Werkzeuge zu demontieren sein sollte.

Die Spannvorrichtung der DE 89 11 061 U1 bedingt allerdings eine aufwendige mechanische Bearbeitung von vier miteinander in Verbindung stehenden Gewinden an verschiedenen Bauteilen. Im übrigen werden die Klemmwirkung und die Aufpreß- und Abziehkräfte stark von Toleranzen bei der Fertigung der verschiedenen Gewinde bestimmt, was sich wiederum auf die Größe der übertragbaren Drehmomente auswirkt.

Der Erfindung liegt die Aufgabe zugrunde, eine Wellen-Naben-Verbindung mit integrierter Abziehvorrichtung zu schaffen, die aus wenigen, einfach herzustellenden Teilen besteht, wobei zum Spannen und Lösen der Verbindung lediglich ein einfaches Werkzeug eingesetzt werden sollte.

Die Aufgabe wird erfindungsgemäß gelöst durch eine in eine Gewindebohrung der Welle einzudrehende, mit einem Kopf versehene Schraube, die einen Innenmehrkant zur Aufnahme eines der Schraubendrehung dienenden Schlüssels besitzt, wobei der Kopf der Schraube bei Herstellung der Wellen-Naben-Verbindung einerseits an einer von der Welle abgewandten Stirnfläche der Nabe zur Anlage kommt, während andererseits der Kopf in Lösungsrichtung durch ein Abdrückteil beaufschlagt wird, das nach Anbringung der Schraube an der Nabe zu befestigen ist, wobei das Abdrückteil so geartet ist, daß es den Zugang zum Innenmehrkant der Schraube frei läßt und eine Drehung der Schraube in beiden Richtungen zuläßt.

Die erfindungsgemäße Verbindung bedient sich zweier üblicher Gewinde (Innen- und Außengewinde), die als solche bewährt und unproblematisch sind. So entspricht auch die Art der Befestigung einer üblichen Schraubverbindung, bei der die zur Welle gerichtete Stirnfläche des Schraubenkopfes an einer von der Welle abgewandten Stirnfläche der Nabe zur Anlage kommt. Neu ist, daß die andere Stirnfläche des Schraubenkopfes dazu genutzt wird, einen in Lösungsrichtung der Verbindung wirkenden Druck auf ein an der Nabe befestigtes Abdrückteil auszuüben. Hierzu genügt es, die Schraube mit Hilfe eines in deren Innenmehrkant eingreifendes Werkzeug in Lösungsrichtung zu drehen.

Eine zweckmäßige Ausgestaltung der Erfindung sieht vor, daß zwischen der in Lösungsrichtung wirksamen Stirnfläche des Kopfes und der dieser gegenüberliegenden Stirnfläche des Abdrückteils ein nach der Herstellung der Wellen-Naben-Verbindung verbleibender Spalt besteht. Hierdurch wird erreicht, daß vor dem Abziehen der Nabe von der Welle zunächst die Schraubenverbindung gelöst wird und daß eine Reibung der Stirnfläche des Schraubenkopfes jeweils nur einseitig erfolgt.

Die Erfindung ist anwendbar bei allen Wellen-Naben-Verbindungen, also bei Preßpassungen mit zylindrischem oder kegelförmigem Sitz sowie bei formschlüssigen Sitzen mit Paßfedern, mit Kerbzahn- oder mit Polygonprofil.

Für die Gestaltung der Schraube und des mit ihr zusammenwirkendes Abdrückteils gibt es eine Vielzahl von Möglichkeiten. An dieser Stelle seien nur einige bevorzugte Ausführungen genannt.

Besonders vorteilhaft ist eine Schraube, deren Kopf mit einem abgesetzten Bund versehen ist, an welchem das Abdrückteil bei in Lösungsrichtung gedrehter Schraube anliegt. Vorzugsweise besitzt die Schraube einen Innensechskant, also eine Gestaltung, die sich für Schrauben weitgehend durchgesetzt hat.

Der Kopf der Schraube ist vorzugsweise in einer Ausnehmung der Nabe angeordnet wobei das Abdrückteil sich ebenfalls in dieser Ausnehmung befindet.

So kann das Abdrückteil aus einem mit einem Außengewinde versehenen, in eine entsprechende Ausnehmung der Nabe einzuschraubenden Ring gebildet werden, wobei das Abdrückteil zwei zur Aufnahme eines Schraubenschlüssels dienende Bohrungen besitzt.

Hierbei ist es von Vorteil, wenn das Abdrückteil und die es aufnehmende Ausnehmung ein Gewinde haben, das eine andere Steigung besitzt als die Schraube der Wellen-Naben-Verbindung. Hier kommt vor allem eine zum Schraubengewinde gegenläufige Steigung in Betracht. Dies verhindert auf jeden Fall, daß beim Lösen der Schraube das Abdrückteil durch die an ihm anliegende Schraube mitgenommen wird.

Das Abdrückteil kann aber auch durch eine Scheibe gebildet werden, welche mittels eines Sicherungsringes in der Ausnehmung der Nabe gehaltert wird. Ebenso kann auch die als Abdrückteil dienende Scheibe in die Ausnehmung der Nabe eingeschweißt sein.

Bei einer weiteren der Erfindung folgenden Verbindung ist der Kopf der Schraube ohne Absatz ausgeführt, er befindet sich in einer Ausnehmung der Nabe, während das Abdrückteil auf der von der Welle abgewandten Stirnfläche der Nabe befestigt ist. Der Durchmesser des Kopfes ist dabei so groß ausgeführt, daß er während des Lösungsvorganges von dem Abdrückteil beaufschlagt wird. Für die Anbringung des Abdrückteils auf der Stirnfläche der Nabe gibt es auch hier verschiedene Möglichkeiten, wobei an dieser Stelle nur die Befestigung mit Hilfe mehrerer Schrauben bzw. durch eine Schweißung erwähnt werden soll.

Schließlich sei noch darauf hingewiesen, daß das Abdrückteil nicht notwendigerweise ein flaches Teil sein muß. Es kann auch durch eine Hülse gebildet werden, die den Kopf der Schraube umgibt und die beispielsweise durch eine Schweißung an der Nabe befestigt ist.

Anhand mehrerer Ausführungsbeispiele wird die Erfindung näher erläutert. Es zeigt die
- Fig. 1: eine erfindungsgemäße Wellen-Naben-Verbindung mit einem in Form eines Ringes ausgeführten Abdrückteil,
- Fig. 2: eine weitere erfindungsgemäße Wellen-Naben-Verbindung, bei der das Abdrückteil durch eine Scheibe gebildet wird,
- Fig. 3: eine erfindungsgemäße Wellen-Naben-Verbindung mit einem auf der Stirnfläche der Nabe aufgeschweißten Abdrückteil.

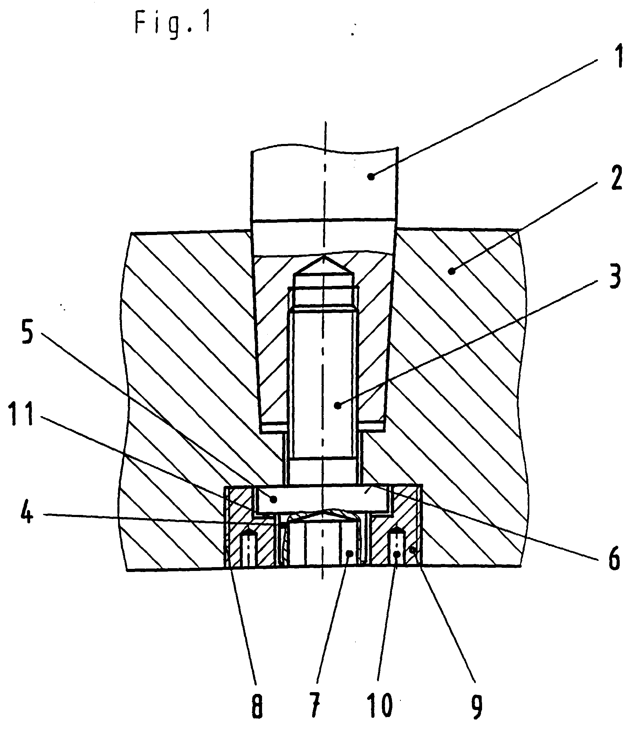

Die in der Fig. 1 dargestellte Verbindung wird hergestellt zwischen einer Welle 1 und einer Nabe 2. Die Welle 1 und die Nabe 2 sind im Verbindungsbereich jeweils mit einem Außen- bzw. einem Innenkonus ausgestattet. Zur Befestigung dient eine Schraube 3, die in ein Innengewinde der Welle 1 eingeschraubt ist. Der Kopf 4 der Schraube besitzt einen Bund 5, der an einer Stirnfläche 6 der Nabe 2 zur Anlage kommt. Im Kopf 4 der Schraube 3 ist ein Innensechskant 7 angeordnet, der die Verwendung eines üblichen Innensechskantschlüssels zum Festziehen und Lösen der Schraube 3 erlaubt.

In einer den Kopf 4 der Schraube 3 umgebenden Ausnehmung 8 der Nabe 2 ist ein Innengewinde angeordnet, in das ein mit einem Außengewinde versehenes Abdrückteil 9 eingeschraubt ist. Während die Schraube 3 und die sie aufnehmende Bohrung der Welle 1 ein Rechtsgewinde besitzen, verfügen die Ausnehmung 8 und das Abdrückteil 9 über ein Linksgewinde. Das Einschrauben des Abdrückteils 9 erfolgt mit Hilfe eines - nicht dargestellten - Schraubenschlüssels, der mit zwei Stiften versehen ist, welche in Bohrungen 10 des Abdrückteils 9 eingreifen.

Die Montage der in der Figur 1 dargestellten Wellen-Naben-Verbindung geht folgendermaßen vonstatten:

Der Innenkonus der Nabe 2 wird auf den Außenkonus der Welle 1 aufgeschoben und die Schraube 3 wird mittels eines Innensechskantschlüssels festgezogen. Das beim Festziehen aufgewandte Drehmoment entscheidet über den vom Bund 5 der Schraube 3 auf die Stirnfläche 6 der Nabe 2 ausgeübten Druck und damit über die Pressung im Bereich der Konusverbindung.

Nach dem Festziehen der Schraube 3 wird das Abdrückteil 9 in die Ausnehmung 8 der Nabe 2 eingeschraubt, wobei schließlich das Abdrückteil 9 mit einer zur Welle 1 gerichteten Stirnfläche an der Stirnfläche 6 der Nabe 2 zur Anlage kommt.

Zwischen den einander gegenüberliegenden Stirnflächen des Bundes 5 und des Abdrückteils 9 verbleibt ein Spalt 11.

Das Lösen der Schraube 3 und das Abziehen der Nabe 2 von der Welle 1 erfolgt dadurch, daß in den Innensechskant 7 der Schraube 3 ein Schlüssel eingesetzt und in Lösungsrichtung der Schraube 3 bewegt wird. Dabei wird zunächst die Schraube 3 gelöst und so weit gedreht, bis der Spalt 11 überwunden ist und der Bund 5 an der ihm zugewandten Stirnfläche des Abdrückteils 9 zur Anlage kommt. Hiernach wird durch Belastung des Schraubenschlüssels ein Druck aufgebaut, der geeignet ist, den Innenkonus der Nabe 2 von dem Außenkonus der Welle 1 zu lösen. Der nun folgende Schraubvorgang dient dem Herausdrehen der Schraube 3 aus der Welle 1, er ist mit einem geringeren Drehmoment zu bewerkstelligen als das Lösen der Wellen-Naben-Verbindung.

Weil die Schraube 3 und die sie aufnehmende Bohrung der Welle 1 ein Rechtsgewinde besitzen, während das Abdrückteil 9 und die Ausnehmung 8 mit einem Linksgewinde versehen sind, wird sichergestellt, daß das Abdrückteil 9 nicht unbeabsichtigt mit der in Lösungsrichtung bewegten Schraube 3 herausgedreht wird, wodurch ein Abziehen der Nabe 2 von der Welle 1 vermieden würde. Der Spalt 11 stellt sicher, daß das Lösen der Schraubverbindung und das Abziehen der Nabe 2 von der Welle 1 nacheinander erfolgen, daß also der auf den Schraubenschlüssel auszuübende Maximaldruck minimiert wird. Außerdem wird durch den Spalt 11 erreicht, daß beim Lösen der Schraube 3 und der Wellen-Naben-Verbindung jeweils nur an einer Stirnfläche des Bundes 5 eine Reibung erfolgt.

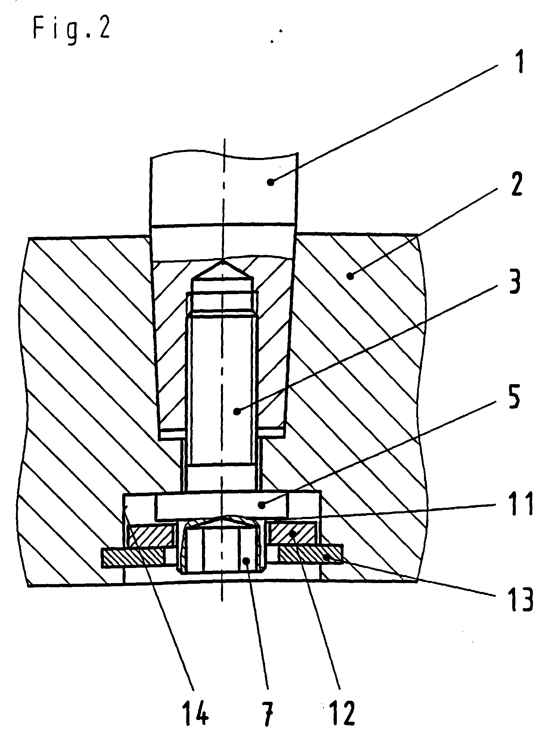

Die in der Fig. 2 dargestellte Ausführung entspricht in ihrem Wirkprinzip der Ausführung der Fig. 1. Auch hier besitzt die Schraube 3 einen Absatz 5, der sowohl der Herstellung als auch der Lösung der Wellen-Naben-Verbindung zu dienen vermag. Das Abdrückteil wird hier allerdings durch eine Scheibe 12 gebildet, die mit Hilfe eines Sicherungsringes 13 in einer Ausnehmung 14 der Nabe 2 gehaltert wird.

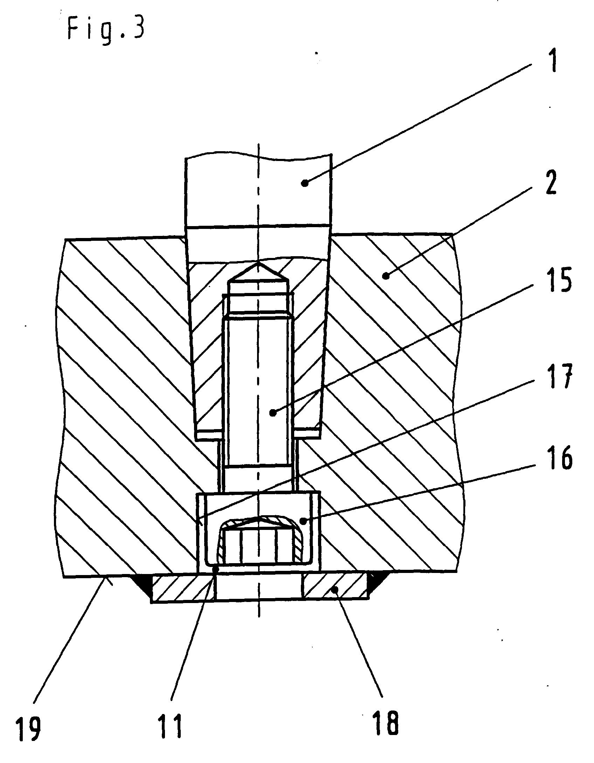

Auch die Ausführung der Fig. 3 funktioniert in der prinzipiell gleichen Weise wie die Ausführung der Fig. 1 und 2. Diese Ausführung ist allerdings insofern vereinfacht, als die Schraube 15 einen durchgehend runden Kopf 16 ohne Absatz besitzt. Der Kopf 16 ist in einer Ausnehmung 17 der Nabe 2 angeordnet. In Lösungsrichtung wird er beaufschlagt durch eine Platte 18, die auf der Stirnfläche 19 der Nabe 2 durch Schweißung befestigt ist.

## Patentansprüche

1. Wellen-Naben-Verbindung, bei der die Nabe mit einer axial zur Welle gerichteten Bewegung auf die Welle aufzuschieben und dort mittels eines in eine erste Richtung gedrehten Schraubelementes zu befestigen ist, wobei mit Hilfe des entgegen der ersten Richtung gedrehten Schraubelementes die Nabe von der Welle abzuziehen ist, **gekennzeichnet durch** eine in eine Gewindebohrung der Welle (1) einzudrehende, mit einem Kopf (4, 16) versehene Schraube (3, 15), die einen Innenmehrkant (7) zur Aufnahme eines der Schraubendrehung dienenden Schüssels besitzt, wobei der Kopf (4, 16) der Schraube (3, 15) bei Herstellung der Wellen-Naben-Verbindung einerseits an einer von der Welle (1) abgewandten Stirnfläche (6) der Nabe (2) zur Anlage kommt, während andererseits der Kopf (4, 16) in Lösungsrichtung durch ein Abdrückteil (9, 12, 18) beaufschlagt wird, das nach Anbringung der Schraube (3, 15) an der Nabe (2) zu befestigen ist, wobei das Abdrückteil (9, 12, 18) so geartet ist, daß es den Zugang zum Innenmehrkant (7) der Schraube (3, 15) frei läßt und eine Drehung der Schraube (3, 15) in beiden Richtungen zuläßt.

2. Wellen-Naben-Verbindung nach Anspruch 1, dadurch gekennzeichnet, daß zwischen einer in Lösungsrichtung wirksamen Stirnfläche des Kopfes (4, 16) und der dieser gegenüberliegenden Stirnfläche des Abdrückteils ein nach der Herstellung der Wellen-Naben-Verbindung verbleibender Spalt besteht.

3. Wellen-Naben-Verbindung nach Anspruch 1 oder 2, dadurch gekennzeichnet, daß der Kopf (4, 16) mit einem abgesetzten Bund versehen ist, an welchem das Abdrückteil bei in Lösungsrichtung gedrehter Schraube (3) anliegt.

4. Wellen-Naben-Verbindung nach einem der Ansprüche 1 bis 3, gekennzeichnet durch einen im Kopf (4, 16) angeordneten Innensechskant.

5. Wellen-Naben-Verbindung nach einem der Ansprüche 1 bis 4, dadurch gekennzeichnet, daß das Abdrückteil in einer den Kopf (4, 16) umgebenden Ausnehmung der Nabe angeordnet ist

6. Wellen-Naben-Verbindung nach Anspruch 5, dadurch gekennzeichnet, daß das Abdrückteil durch einen mit zwei zur Aufnahme eines Schraubenschlüssels dienenden Bohrungen (10) und einem Außengewinde versehenen, in eine entsprechende Ausnehmung (8) der Nabe (2) einzuschraubenden Ring (9) gebildet wird.

7. Wellen-Naben-Verbindung nach Anspruch 6, dadurch gekennzeichnet, daß der Ring (9) und die diesen aufnehmende Ausnehmung (8) der Nabe (2) ein Gewinde haben, das eine andere Steigung besitzt als das Gewinde der Schraube (3).

8. Wellen-Naben-Verbindung nach Anspruch 5, dadurch gekennzeichnet, daß das Abdrückteil durch eine Scheibe (12) gebildet wird, welche mittels eines Sicherungsringes (13) in der Ausnehmung (14) der Nabe (2) gehaltert wird.

9. Wellen-Naben-Verbindung nach Anspruch 5, dadurch gekennzeichnet, daß das Abdrückteil durch eine Scheibe gebildet wird, welche in die Ausnehmung (14) der Nabe (2) eingeschweißt ist.

10. Wellen-Naben-Verbindung nach einem der Ansprüche 1 bis 4, dadurch gekennzeichnet, daß der Kopf (16) der Schraube (15) in einer Ausnehmung (17) der Nabe (2) angeordnet ist, während das Abdrückteil (18) auf der von der Welle (1) abgewandten Stirnfläche (19) der Nabe (2) befestigt ist.

11. Wellen-Naben-Verbindung nach Anspruch 10, dadurch gekennzeichnet, daß das Abdrückteil (18) durch mehrere Schrauben auf der Stirnfläche (19) der Nabe (2) befestigt ist.

12. Wellen-Naben-Verbindung nach Anspruch 10, dadurch gekennzeichnet, daß das Abdrückteil (18) auf der Stirnfläche (19)der Nabe (2) durch Schweißung befestigt ist.

13. Wellen-Naben-Verbindung nach einem der Ansprüche 1 bis 4, dadurch gekennzeichnet, daß der Kopf (4, 16) von einer als Abdrückteil wirkenden Hülse umgeben ist, welche an der Nabe (2) durch Schweißung befestigt ist.
